# EUROPEAN PATENT APPLICATION

(11) **EP 2 110 912 A1**
(43) Date of publication of application: **21.10.2009**
(21) Application number: 08105660.8
(22) Date of filing: 24.10.2008
(51) Int. Cl.: H02G 3/04

(54) **Cable carrying duct and related manufacturing method.**

(30) Priority: 24.10.2007 IT TO20070754
(71) Applicant: Serint di Racca Mauro E C. S.A.S, 10095 Grugliasco (TO) (IT)
(72) Inventor: Racca, Mauro, 10090, Reano (TO) (IT)
(74) Representative: Robba, Pierpaolo

(57) **Abstract**

The present invention concerns a cable carrying duct comprising a substantially U-shaped body with at least a base (12) and two side walls (14, 14a, 14b). The duct comprises a first (12), a second (14a) and a third (14b) substantially planar elongated member and is configured so that the first elongated member (12) has respective fastening elements at respective edges (21a, 21b) and the second and third elongated members have, at respective edges (41a, 41b), first removable coupling elements arranged to mutually cooperate with the fastening elements to form the duct body. The invention also concerns a method of manufacturing the duct according to the invention.

## Description

### Technical field

The present invention generally relates to a cable carrying duct and to a method of manufacturing cable carrying ducts.

More particularly, the present invention relates to ducts that are arranged to hold electrical cables or conduits and are used to interconnect devices connected to a power supply, such as electrical boards and/or power distribution plants.

In the present description, the term "cable carrying duct" is used to denote both ducts carrying electrical cables and ducts carrying different types of conduits.

### Prior art

Cable carrying ducts are generally known. Such ducts generally consist of a U-shaped body arranged to hold the cables.

Prior art ducts also include, for instance, a cover, generally removable, arranged to cover the cables and to protect the access to the cables themselves.

The duct body is an extruded member, generally of rigid PVC, including a base wall and two side walls arranged to generate the "U" shape, and the cover is secured onto said member for instance by a snap coupling.

The side walls forming the duct together with the base wall are preferably of three types: solid walls, slotted walls with so-called wide separation strips, slotted walls with so-called narrow separation strips.

The different embodiments of the side walls of the duct are chosen depending on the type of application, for instance depending on whether the duct is to be located inside or outside electrical boards: actually, as it can be readily appreciated, in case of ducts contained in electrical boards, the slots allow the passage of the cables from the duct to devices present on the electrical board itself.

It is also known that the ducts have standard cross-sectional sizes, generally denoted by the values of the width of the base wall (base) and the height of the side walls.

Six standard bases are used, with widths 25, 40, 60, 80, 100 and 120 mm. Six standard side walls are used, with heights 25, 40, 60, 80, 100 and 120 mm.

From what stated above it is apparent that, generally, the prior art ducts are made according to thirty-six different models that, by considering the different types of side walls (solid walls, slotted walls with wide separation strips, slotted walls with narrow separation strips) become in the whole 108 models.

It is also known that the ducts are sold as bars, preferably two meter long, and, since they are formed of rigid and bulky profiles with U-shaped section, the container, e.g. of cardboard, in which they are packed for being sold is standardised. Thus, the container can contain only a given number of metres of ducts, depending on the various cross-sectional sizes envisaged.

Of course, even if this is disregarded here, as a further variant it should to be taken into account that the ducts can be of different colours, so that the number of models and packages can further increase above the number indicated before.

The above description shows that the currently commercially available ducts suffer from a number of problems.

First, the present U-shaped section of the ducts creates bulk problems as well as higher costs for transport and packaging. Actually, the U-shaped section leaves empty, unused spaces within the package and, consequently, it considerably affects the packaging and transport costs and hence the selling price of the ducts.

Another problem of the ducts is that the transport thereof is complex due to their standard length of 2000 mm: actually, such a length is incompatible with the standard length envisaged for transport on pallets, the maximum sizes of which are 1200 mm x 800 mm. Thus, also such incompatibility contributes to making the duct management complex and to further increase the transport costs.

Besides the transport problems, the prior art ducts also give rise to stock management problems: Actually, since at least 108 duct models, i.e. a particularly high number of models, exist, it is clear that the management of such a high number of models by the duct retailers makes the stock management complex. In other words, the retailers are obliged to keep 108 duct models or codes in the store, with waste of room and the risk that scarcely requested models are available whereas more frequently requested models are lacking.

Lastly, as a further problem, it is to be taken into account that, in case of maintenance interventions. the cover, if any, which is fixedly interlocked with the body, is removed and put aside while awaiting the completion of the intervention, with a consequent disorder and the risk that the cover itself is not put again in the intended position or even can be lost.

In synthesis, the Applicant has realised that the present cable carrying ducts suffer from several problems and that there is a strong need for novel ducts which solve, preferably through a single technical solution, the problems described above.

### Description of the invention

The present invention aims at solving the problems described above of the prior art ducts.

Such problems are solved by the cable carrying duct as claimed.

The present invention also concerns a method of manufacturing cable carrying ducts.

The claims are integral part of the technical teaching provided herein in respect of the invention.

In accordance with a preferred embodiment, a U-shaped cable carrying duct having a base and two side walls includes, according to the present invention, at least three elongated planar members that can be modularly assembled together by means of respective hooking and coupling elements and that are arranged to mutually cooperate in order to form the duct.

In accordance with another feature of the present invention, the modular members are extruded members where a first member is arranged to form the duct base, and a second and a third member are arranged to form the duct walls.

In accordance with a further feature of the present invention, the extruded members are cut to lengths that can be easily transported.

In accordance with yet another feature of the present invention, the duct includes a further planar member arranged to form the cover of the cable carrying duct. In the preferred embodiment, the cover has cylindrical fastening means arranged to allow the cover rotation about at least one of the duct walls.

### Brief description of the figures

The above and other features of the present invention will become apparent from the following description of a preferred embodiment, made by way of non limiting example with reference to the accompanying drawings, in which elements denoted by a same or a similar numerical reference correspond to components having a same or a similar function and construction, and in which:
- Fig. 1 shows a preferred embodiment of the duct according to the invention;
- Fig. 2 is a cross-sectional view of the duct shown in Fig. 1, with open cover;
- Fig. 3 shows a type of side wall of the duct according to the invention.

### Description of a preferred embodiment

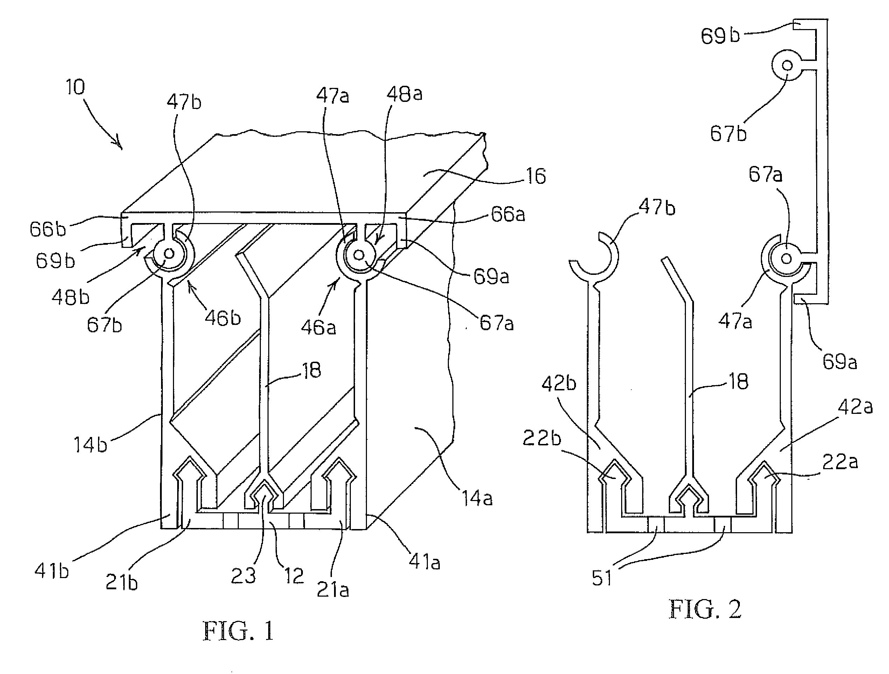

Referring to Fig. 1, a U-shaped duct 10 having a base and two side walls, according to the present invention, includes a first elongated member 12, arranged to form the duct base, and a second and a third elongated member 14a, 14b, respectively, arranged to form the side walls of the duct. Preferably, the duct also includes a fourth elongated member 16 arranged to act as the duct cover.

In the preferred embodiment, all members 12, 14a, 14b, 16 are separate from one another when they are not in use.

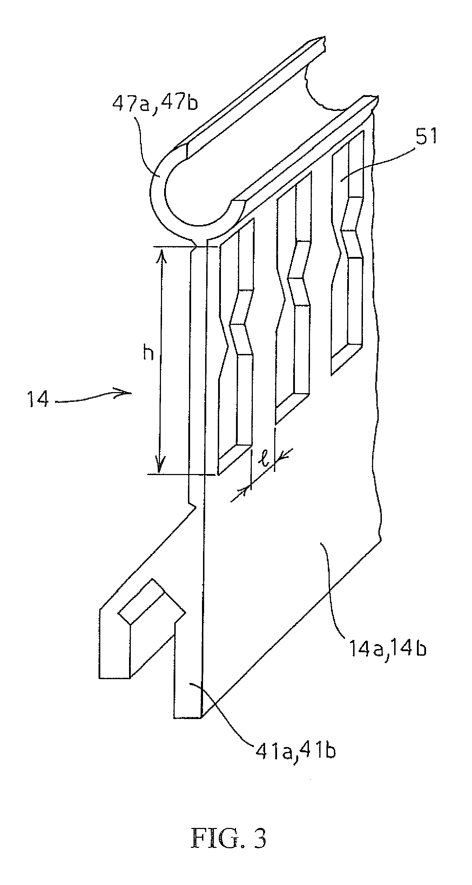

The first element (base) 12, having for instance a predetermined length, has side edges (base edges) 21a and 21b with respective fastening elements 22a and 22b (Figs. 1, 2 and 3) formed for instance by two rigid fasteners shaped as arrows orthogonal to the base (i.e. vertically arranged).

Preferably, base 12 includes, in other embodiments, a central fastening element 23, for instance with a cross-section shaped as a vertical arrow, extending over the whole length of the base at a substantially intermediate position between base edges 21a and 21b. More preferably, a plurality of slots 51 are formed between central coupling element 23, or the longitudinal axis, and base edges 21a and 21b, said slots allowing securing base 12 onto boards or walls.

In the preferred embodiment, the second and third members 14a and 14b (side walls) have mutually symmetrical shape (they are the mirror image of each other), so that they can advantageously be manufactured as a single element 14 by a single extrusion operation. In the preferred embodiment, they are configured to be secured to fastening elements 22a and 22b, respectively, in symmetrical manner.

More particularly, side walls 14a and 14b preferably have predetermined lengths, for instance the same lengths as the base, and have, along a first side edge (first wall edge) 41a and 41b, respectively, first coupling elements 42a and 42b, respectively, for instance, coupling elements arranged to be snap fitted onto fastening elements 22a and 22b of base 12 and to cooperate therewith to form, in use, a U-shaped duct 10.

In the preferred embodiment, side walls 14a and 14b have, along a second side edge (second wall edge) 46a and 46b, respectively, second coupling elements 47a and 47b, respectively, each having for instance a cross-section shaped as a round hollow seat with an opening 48a and 48b, respectively, of about 90° directed, in use, towards the outside of the "U" formed by duct 10.

Preferably, in accordance with variant embodiments, each side wall 14a and 14b can be solid or it can have a plurality of vertical slots with narrow separation strips or, in the alternative, wide separation strips.

The slotted walls are arranged to allow the passage of cables or conduits for industrial or civil use though slots 51. Preferably, the slots are separated by separation strips vertically oriented relative to the longitudinal direction of the side walls and having height "h" depending on the height of the side walls and a sufficiently reduced width "l", such that said strips can be removed, for instance in order to allow passage of cables with greater sizes than the slots, by means of tools of common use, such as for instance pliers or nippers.

The fourth elongated member (cover) 16, if provided, is arranged to be secured, in use, to the second coupling elements 47a and 47b, respectively, of side walls 14a and 14b.

More particularly, cover 16 has a predetermined length, for instance the same length as the base, and has side edges (cover edges) 66a and 66b, respectively, having respective fastening elements or means 67a and 67b, respectively, for instance two profiles with round and preferably internally bored sections, arranged to be secured to the second coupling elements 47a and 47b, respectively, and to cooperate therewith to form a closed duct 10.

The preferred shape of fastening elements 67a and 67b, respectively, is adapted to allow the cover rotation about one of side walls 14a and 14b, without need of completely removing cover 16 from duct 10.

In a more preferred embodiment, each fastening element 67a and 67b, or at least one fastening element 67a or 67b, is equipped with a respective L-shaped extension 69a and/or 69b, respectively, arranged to determine an abutment as well as to limit the rotation of cover 11 relative to the side walls, for instance an abutment onto the side wall upon a rotation of 90°.

In accordance with further embodiments, duct 10 can include a partition 18 arranged to be secured, in equivalent manner to that described for the side walls, to central fastening element 23 in order to separate different types of cables inside duct 10.

Thus, duct 10 as described can be built by assembling modular parts consisting of base 12, sidewalls 14, cover 16, if any, and partition 18, if any.

The base, in the preferred embodiment, may have standard width, e.g. 25, 40, 60, 80, 100 and 120 mm.

The side walls, in the preferred embodiment, may have standard height, e.g. 25, 40, 60, 80, 100 and 120 mm, and, for each width, they are preferably formed as solid walls.

The above description makes clearly apparent that, by providing a limited number of bases 12, e.g. six types of bases with standard sizes, a limited number of side walls 14a, 14b, e.g. six types of side walls with standard sizes, and possible types of covers with sizes corresponding to the base sizes, all standard ducts of the prior art can be obtained.

In other words, all standard ducts can be obtained by using eighteen types of components, or twenty-four types of components if also partition 18 is considered.

If also side walls 14a and 14b are distinguished depending on the slot arrangement, thirty types of components, including e.g.:
- six types of bases 12;
- eighteen types of side walls 14a or 14b;
- six types of covers 16;
would allow obtaining all standard ducts that, in accordance with the prior art, would require 108 types of components.

Of course, as the skilled in the art can readily understand, what stated above does not take into account the possible provision of six types of partitions 18, as described.

Assembling of the ducts described before takes place as follows.

A type of base 12 with predetermined size and two side walls, e.g. solid side walls, are for instance selected. The first coupling elements in the side walls are secured to fastening elements 22a and 22b in the base so as to form a U-shaped duct having base 12 and side walls 14a and 14b.

At this point, duct 10 can be used to hold the cables and can be completed by cover 16, by fitting fastening elements 67a and 67b of the cover into the second coupling elements in the side walls.

In the preferred embodiment, the manufacture of the parts (12, 14, 16 or 18) arranged to build up duct 10 comprises the following steps.

In a first step the profile of each part (12, 14, 16 or 18) is extruded, for instance with length 4 m or 6 m, depending on the economic convenience of the extrusion, and then such lengths will be cut to a desired size only later on, depending on the commercial needs.

In a second step, base wall 12 undergoes a punching and shearing process allowing obtaining the base slots allowing securing duct 10 e.g. to a wall.

In an optional third phase, side walls 14 requiring the presence of slots undergo a punching and shearing process allowing obtaining slotted side walls 14 with wide or narrow slot separation strips.

In a further phase, the parts with the lengths resulting from the extrusion are cut, for instance to sizes 400 mm, 600 mm, 800 mm and 1200 mm, so as to optimise use thereof in the apparatuses as well as the transport in the pallets.

Of course, should other lengths of the parts forming the duct be required, in order to optimise long duct sections, the possibility obviously exist of cutting to sizes up to the overall lengths of the extruded pieces, e.g. 4 m or 6 m.

As it can be readily understood by the skilled in the art, cutting the parts (12, 14, 16 or 18) allows optimising the amount of parts or part codes to be managed at the store, for instance by a duct distributor or retailer or by an end customer.

The cutting sizes indicated above, being modular, are also arranged to optimise the transport costs, taking into account that the pallets are 1200 mm long x 800 mm wide.

The cutting sizes indicated above have also been envisaged in order to optimise the manufacture of electrical wirings. Actually, since electrical boards preferably internally include the ducts and a panel on which the apparatuses are mounted, the cutting sizes indicated above can be easily combined, without heavy wastes due to the cutting, with the sizes of the panels, which preferably are about 400 mm, 600 mm and 800 mm wide.

In synthesis, the above description shows that the proposed solution allows manufacturing the cable carrying ducts by using modular members that can be assembled together and hence has several advantages over the prior art.

First, retailers can manage all 108 duct models by only thirty part codes.

The reduced amount of pieces and the optimisation of the sizes and the packages will allow optimising the turnover of the less frequently sold duct models, and meeting the demands of small amounts by the customers.

Inside each package, taking into account that no U-shaped piece but substantially planar extruded members are provided, the amount of pieces per volume unit will be relatively higher, so that the transport prices and consequently the selling prices are strongly reduced.

Moreover, the novel shape of the cover, having fastening means or cylindrical elements 67a and 67b and an L-shaped extension, or stopping element, 69a and 69b on the respective side edges, allows not only securing the cover to the side walls, but also rotating the cover about itself and, thanks to the stopping element, stopping the cover at a predetermined position, e.g. at 90°, as if the cover was hinged to the side wall. This is a further novel feature since, in case of interventions, e.g. for maintenance, the operator can rotate the cover without detaching it from the duct and can use it as a supporting base for the wiring, e.g. of the cables.

In accordance with further embodiments, the cover may also have one or more grooves, formed for instance during the extrusion step, allowing putting references or symbols identifying devices or components located near the duct.

Advantageously, should the need arise of joining two duct sections. the cylindrical element present in the cover and fitting into the side wall can act as a continuity element between the two sections by keeping them aligned: to this end, the cover will be cut at a position suitably offset relative to the side wall cut.

Obvious changes and modifications can be made in the above description in respect of sizes, shapes, materials, components and connections, as well as in respect of the details of the circuitry and the illustrated construction and the operating manner, without departing from the scope of the invention as defined in the following claims.

## Claims

1. A cable carrying duct comprising a substantially U-shaped body with at least a base (12) and two side walls (14, 14a, 14b), **characterised by** at least a first (12), a second (14a) and a third (14b) substantially planar elongated members, in which:
- said at least a first elongated member (12) has respective fastening elements (22a, 22b) at respective edges (21a, 21b);
- said at least a second (14a) and a third (14b) elongated members have, at a respective edge (41a, 41b), first removable coupling elements (42a, 42b) arranged to mutually cooperate with said fastening elements (22a, 22b) to form the body of said duct.

2. The duct as claimed in claim 1, **characterised by** a fourth substantially planar elongated member (18) having, at respective side edges (66a, 66b), respective fastening means (67a, 67b) arranged to be secured to second coupling elements (47a, 47b) in said at least a second (14a) and at least a third (14b) elongated member, and being configured to operate as a cover of said duct when in use.

3. The duct as claimed in claim 1 or 2, **characterised in that:**
- said first elongated member (12) is arranged to form the duct base and has respective side edges (21a, 21b) equipped with first and second fastening elements (22a, 22b), respectively;
- said second and third elongated members (14a, 14b) are arranged to form the side walls of said duct and have respective first side edges (41a, 41b) equipped with respective first coupling elements (42a, 42b) arranged to be coupled, in use, with said first and second fastening elements (22a, 22b).

4. The duct as claimed in any of claims 1 to 3, **characterised in that** said second and third elongated members (14a, 14b) are identical to each other and, in use, they are fastened in perfectly symmetrical manner to said first elongated member (12).

5. The duct as claimed in any of claims 2 to 4, **characterised in that** said second coupling elements (47a, 47b) and said fastening means (67a, 67b) have a shape arranged to allow the cover rotation about at least one of the side walls.

6. The duct as claimed in claim 5, **characterised in that:**
- said second coupling elements have a rounded hollow shape with an opening (48a, 48b) for the insertion of said fastening means, and
- said fastening means have a cylindrical shape, in particular a hollow cylindrical shape.

7. The duct as claimed in any of claims 5 to 6, **characterised in that** said fastening means (67a, 67b) have an L-shaped extension arranged to limit the cover rotation about the side wall.

8. The duct as claimed in any of claims 1 to 7, **characterised in that** said fastening elements (22a, 22b) in said first elongated member (12) are arrow-shaped fasteners orthogonal to the base plane of the first elongated member.

9. The duct as claimed in any of claims 1 to 8, **characterised in that** said first elongated member (12) includes a further fastening element (23) extending over its whole length and configured to removably secure, inside the duct, a partition (18) arranged to separate the cables within the duct.

10. The duct as claimed in any of claims 1 to 9, **characterised by** slots (51) formed in at least one of the elongated members chosen out of the group comprising:
- the first elongated member;
- the second elongated member;
- the third elongated member.

11. An extruded planar elongated member, **characterised in that** it has, at opposite edges (21a, 21b), respective fastening elements (22a, 22b) configured so as to be secured to corresponding extruded elongated members in order to form the base of a cable carrying duct.

12. An extruded planar elongated member, **characterised in that** it has, at least at one edge, coupling elements (42a, 42b) configured so as to cooperate with the extruded elongated member as claimed in claim 11 in order to form a side wall of a cable carrying duct.

13. An extruded planar elongated member, **characterised in that** it includes, at least at one edge, fastening means with a cylindrical shape, in particular a hollow cylindrical shape, configured so as to cooperate with at least one elongated member as claimed in claim 12 and to rotate about said at least one elongated member so as to form a cover of a cable carrying duct.

14. A method of manufacturing a cable carrying duct comprising a substantially U-shaped body with at least a base (12) and two side walls (14, 14a, 14b), **characterised by** the steps of:
- manufacturing at least three substantially planar elongated members (12, 14a, 14b, 16);
- forming the duct by securing together said elongated members by means of elements (22a, 22b, 42a, 42b) for the mutual fastening and coupling.

15. The method of manufacturing a cable carrying duct as claimed in claim 14, **characterised in that** said step of manufacturing at least three substantially planar elongated members comprises:
- extruding a first elongated member (12) having first and second fastening elements (22a, 22b) at respective edges (21a, 21b);
- extruding a second elongated member (14a) having, at a respective edge (41a), first removable coupling elements (42a) arranged to mutually cooperate with said first fastening elements (22a) to form a first wall of said duct;
- extruding a third elongated member (14b) having, at a respective edge (41b), first removable coupling elements (42b) arranged to mutually cooperate with said second fastening elements (22b) to form a second wall of said duct.

16. The method as claimed in claim 15, **characterised in that** said steps of extruding a second and a third elongated members (14, 14a, 14b) are implemented as a single extrusion step in which said second elongated member (14a) and said third elongated member (14b) are identical (14) and are each the mirror image of the other.

17. The method as claimed in any of claims 14 to 16, **characterised by** the further step of punching and shearing at least one of said at least three planar elongated members in order to form slots (51) in at least one of said at least three planar elongated members.

18. The method as claimed in any of claims 15 to 17, **characterised by** the further step of a extruding at least a fourth planar elongated member (16) having, at respective edges (66a, 66b), first and second fastening means (67a, 67b) arranged to mutually cooperate with said first and second coupling elements (42a, 42b) to form a cover for said duct.

19. The method as claimed in any of claims 14 to 18, **characterised by** the further step of cutting to size said at least three planar elongated members.

20. The method as claimed in claim 19, **characterised in that** said size is chosen out of a group comprising:
- 400 mm size;
- 600 mm size;
- 800 mm size; and
- 1200 mm size.
